# EUROPEAN PATENT SPECIFICATION

(11) **EP 3 017 124 B1**
(45) Date of publication and mention of the grant of the patent: **27.01.2021**
(21) Application number: 14820581.8
(22) Date of filing: 01.07.2014
(51) Int. Cl.: E04C 5/16, E04C 5/20, B65D 85/62

(54) **FEEDER DEVICE**
ZUFÜHRVORRICHTUNG
DISPOSITIF D'ALIMENTATION

(30) Priority: 03.07.2013 SE 1350832
(43) Date of publication of application: 11.05.2016
(73) Proprietor: INNOVATIV PLAST I VÄST AB, 443 61 Stenkullen (SE)
(72) Inventor: ANDERSSON, Stefan, S-443 61 Stenkullen (SE)
(74) Representative: Zacco Sweden AB
(86) International application number: PCT/SE2014/050832
(87) International publication number: WO 2015/002600

(56) References cited:
- WO-A1-2010/068995
- WO-A1-2010/068995
- WO-A1-2014/042577
- AU-A1- 2003 200 226
- DE-A1- 2 649 345
- GB-A- 1 193 996
- US-A- 5 729 949
- US-B2- 7 451 893

## Description

### TECHNICAL FIELD

The present invention relates to a handheld feeder for stackable reinforcement spacers, where the reinforcement spacers are adapted to be used for supporting reinforcement grids in concrete constructions. The size and shape of the spacer is such that it will give reliable support to the reinforcement grid even if the spacers are placed randomly on the support surface. The spacers are distributed by using the handheld feeder and operating it manually. Due to the fact that the positioning of the spacers is not critical, a feeder that allows for a time-effective spreading of reinforcement spacers is provided.

### BACKGROUND ART

Concrete constructions are normally provided with some kind of reinforcement to increase the strength and to prevent the concrete construction to split or crack. The reinforcement can be single reinforcement bars (rebars), reinforcement grids or different kinds of fibres or other. Most common are reinforcement grids made from reinforcement bars of steel when larger areas are to be covered. For smaller areas or as a complement to the grids, single reinforcement steel bars are used.

To achieve the required properties in a construction, the reinforcement is placed at different heights. This height creates a concrete cover around the reinforcement in the finished construction. Reinforcement spacers are used to simplify the work of positioning the reinforcement at the prescribed height and to maintain it there through the process until the concrete has burned. The type of spacer used is influenced from e.g. regulations, the surrounding environment, natural resources or aesthetic opinions.

The concrete cover is defined as the smallest distance between the reinforcement material and the concrete surface of the completed construction. A concrete cover which differs from the requirements can negatively affect the strength and life cycle of a construction. The requirements on a concrete cover can be set by national regulations and may vary depending on type of construction and on the surrounding environment. One purpose of the concrete cover is to prevent moisture to reach the reinforcement steel, in order to avoid the negative effects corrosion has on the construction. Corrosion will, through its expansion, slowly break apart the nearby concrete, which causes more moisture to reach the steel which in turn accelerates the corrosion process. Over time this will weakens the construction strength.

To provide support for the reinforcement, reinforcement spacers are used. These are often made from plastic and are designed to facilitate that the concrete fully embraces the reinforcement and the spacers. Air pockets in the final construction, especially larger air pockets, should be avoided. Depending on the shape of the spacer, it must be provided with some kind of apertures in order to provide escape ways for air to disappear when concrete is poured upon them.

Reinforcement spacers are made from different materials. Most common are spacers made from plastic, but steel, concrete and other materials are also used. Plastic spacers have several advantages compared to other materials, such as ease of handling, low weight and generally low price, the manufacturing process is fast and spacers can easily be formed to a desired shape. Concrete spacers can be used in most constructions. However, the material makes them heavy and the design makes them more complicated to work with. They are primarily used when plastic is not allowed. Steel spacers are primarily used as spacers inside constructions, e.g. between two layers of reinforcement grids. Steel spacers are seldom used on a ground surface as this will cause corrosion problems.

Depending on the field of application, reinforcement spacers are divided into two main groups, foundation spacers and wall spacers. Foundation spacers are primarily used for positioning reinforcement in foundations/floors, while wall spacers are primarily used for positioning reinforcement in walls and vaults. One main difference is the type of underlying surfaces that they are intended to be used on.

Wall spacers are designed with thin legs and/or small feet. The formwork surface is generally hard and even, being a mould, which helps to prevent the spacer to tip over or to cut through the surface. When the formwork is removed, the spacer feet are made visible. At a wall or vault not further processed, these feet will show in the wall surface, which is not desirable. Therefore wall spacers are designed with minimal feet and are also nearly always coloured like the surrounding concrete. Low visibility is a major requirement.

Foundation spacers are designed to be used when the formwork surface is classified as soft and/or uneven, such as a bedding of coarse sand, gravel, grit or other free-draining material or ground. The bearing surface of the spacer towards the ground has a relatively large area and often a large diameter to aid the spacer to stand stable on the ground and not to dig in to the ground or to tip over. Since foundation spacers primarily are used for floors and foundations, the spacer will point downward and will not be visible. Foundation spacers thus have no aesthetic significance. The most important feature is a base plate having an area large enough not to punch the underlying surface.

Foundation spacers are divided into two subgroups due to differences in design and the way they are used. One type is referred to as ground spacers. These typically have a large base plate and a smaller support area at the top. Due to the small support area, each spacer has to be placed in an exact position to support any reinforcement. Ground spacers are seen as cheap but time consuming to work with. The other type is linear spacers. They are long and narrow. They support the reinforcement anywhere on its support area lengthwise and no exact positioning is thus required. Due to their length, often 2 meters, they shorten the working time of placing the spacers. Linear spacers may also create crack lines which may introduce cracking.

Most types of reinforcement spacers are positioned manually on the supporting ground, where wall spacers and ground spacers often must be placed with an exact position. Some spacers must be fastened to the reinforcement grid. Linear spacers are often provided in 2 meter lengths and are often placed next to each other lengthwise. They are relatively heavy.

US 6775954 describes a linear foundation spacer comprising three parts that must be assembled before use. AU 2006100538 describes a linear wall spacer, having small feet adapted for the use as wall spacer. A specific base segment can be attached to the feet, such that the spacer can be used as a foundation spacer. US 4942714 describes a linear wall spacer. US 2005005564 describes a stackable foundation spacer having an upper receiving section for fixedly retaining of a wire mesh.

DE 2821078 describes a circular wall spacer adapted for producing prefabricated wall modules, where the spacer can be placed randomly on the mould. With a diameter larger than a single square in a reinforcement grid, the spacer will always give support regardless its position. As most wall spacers, the legs and feet are thin, which makes it unsuitable for use on soft underlying formwork surfaces like soil or insulation, such as EPS (extruded polystyrene). The small feet will sink down in the support surface from the weight of the reinforcement and the workers walking upon it, giving an incorrect concrete cover. DE 2809430 also describes a similar wall spacer that can be positioned randomly.

These described spacers are handled and laid out manually.

WO 2010/068995 A1 and AU 2003200226 A1 disclose different devices for installing bar chairs beneath a steel reinforcing grid used in concrete slab structures. The devices include a lifting assembly for lifting a section of the reinforcing grid under which the bar chair is to be dispensed

DE 2649345 A1 and GB 1193996 A disclose different tools for mounting disc-like plastics spacers on reinforcing bars.

US 7,451,893 B2, seen as closest prior art document, discloses a ferrule dispenser for dispensing stud welding ferrules. The dispenser comprises a rod that supports a spring loaded cam system. A ferrule is released by pushing the rod downwards on the ground.

These devices and methods are directed to spacers that are attached to the reinforcing grid or bar. They are thus relatively complicated to use. There is thus room for an improved feeder device.

### DISCLOSURE OF INVENTION

An object of the invention is therefore to provide a handheld feeder device for distributing stackable reinforcement spacer for supporting a reinforcement grid.

The solution to the problem according to the invention is described in the characterizing part of claim 1 regarding the handheld feeder device. The other claims contain advantageous embodiments and further developments of the feeder.

In a handheld feeder device adapted to distribute stackable reinforcement spacers, where the reinforcement spacers are stacked in each other, the object of the invention is achieved in that the feeder comprises a body adapted for holding a plurality of stackable reinforcement spacers by a central inner opening of the reinforcement spacer, a handle for holding the feeder device, and a release mechanism adapted for releasing one reinforcement spacer at the time, where the release mechanism comprises a release means arranged to protrude outwards from the feeder body when the release means is in a hold position and the release mechanism is spring-loaded and operated by pulling the handle upwards in order to overcome the force of the spring force of the release mechanism.

By this first embodiment of the handheld feeder device according to the invention, the handheld feeder device can be used to distribute stackable reinforcement spacers used to support reinforcement grids in concrete constructions. Due to the size and shape of the reinforcement spacer, the reinforcement spacers can be positioned randomly and can still support the reinforcement grid. Since the positioning of the spacers is not critical, the distribution of spacers can be made manually in a time-saving manner by walking around with the handheld feeder device and operating the release mechanism at appropriate positions. The positions may be either predefined or may be selected by an experienced user. Further, since the feeder device holds the spacer at a central inner opening of the spacer, the size of the feeder device must not be adapted to the size of the spacer. Spacers of a wide range of different sizes and shapes adapted for different purposes can thus be used with the same feeder device.

The handheld feeder device is provided with two release means that will hold the spacers in two positions. A first release means can hold either a single spacer in a first position or can hold all spacers. A second release means can hold the rest of the plurality of spacers in a second position. By operating the release mechanism, a single spacer will be released from the first position.

In one example, the first release means will hold all spacers in the first position. When the release mechanism is operated, the second release means will protrude outwards to hold all spacers but the lowermost one. When all spacers but one are supported by the second release means, the first release means will retract to release a single spacer. When the release mechanism is returned to the idle position, the first release means will protrude to a holding position and the second release means will retract such that all spacers will be held by the first release means.

In another example, the first release means will retract to release a single spacer when the release mechanism is operated. Thereafter, the first release means protrude outwards and the second release means will retract such that all spacers are held by the first release means. When the release mechanism is returned to the idle position, the second release means will protrude to a holding position and will hold all spacers but one and the first release means will hold the single, lowermost spacer.

The release mechanism is spring-loaded and the release mechanism is operated by quickly pulling the handle upwards. This pulling action will overcome the spring force of the spring-loaded release mechanism, which will release a single spacer.

In an advantageous development of the invention, the handheld feeder device is further provided with a feed-in position in which a new stack of reinforcement spacers can be placed on the feeder device. In this position, both release means align with the body such that the body can be inserted through the stack of reinforcement spacers. The release means may either be spring-loaded or may rest freely in their respective openings. The feed-in position can be activated by pulling the release grip to a feed-in position or by rotating the release grip to a feed-in position. When the feeder device is inserted through the stack of reinforcement spacers, the release grip is released such that the release means protrude from the body and hold the spacers. A reinforcement spacer will be held by inner surfaces of the spacer, either a rim extending inwards from an inner, second upper support surface of the spacer or by another inner surface.

### BRIEF DESCRIPTION OF DRAWINGS

The invention will be described in greater detail in the following, with reference to the embodiments that are shown in the attached drawings, in which
- Fig. 1: shows a first embodiment of a handheld feeder device according to the invention,
- Fig. 2: shows a development of a feeder device according to the invention holding a stack of foundation spacers,
- Fig. 3: shows an example of a foundation spacer suitable for distribution by a handheld feeder device according to the invention,
- Fig. 4: shows a detail of a release mechanism in an idle position, and
- Fig. 5: shows a detail of the release mechanism in a release position.

### MODES FOR CARRYING OUT THE INVENTION

The embodiments of the invention with further developments described in the following are to be regarded only as examples and are in no way to limit the scope of the protection provided by the patent claims. In the following examples, foundation spacers are used as an example of reinforcement spacers. The inventive feeder device is however suitable for all stackable reinforcement spacers.

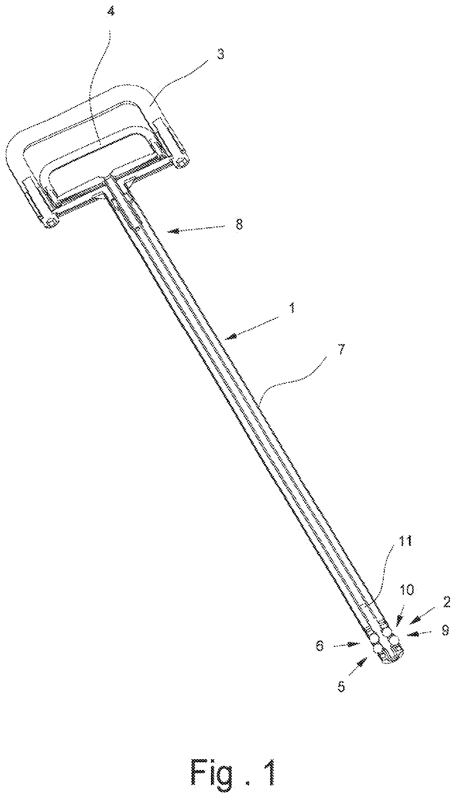

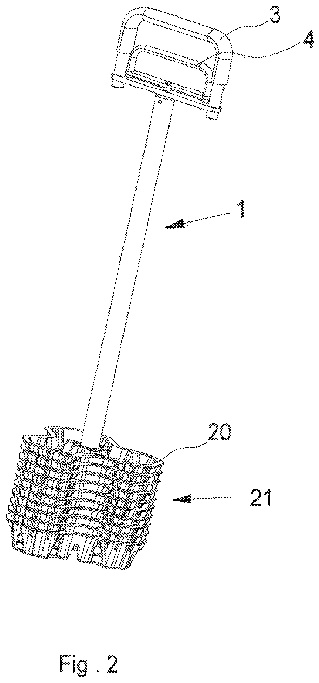

Fig. 1 show a first embodiment of a handheld feeder device 1 according to the invention arranged to distribute stackable reinforcement spacers, such as foundation spacers. Fig. 2 shows a handheld feeder device with a stack 21 of foundation spacers 20. The shown feeder device 1 is intended to be operated by a user walking around and holding and operating the feeder device with one hand. The feeder device comprises a body 7 which is elongated and may be a rod or a similar element. The outer shape of the body may be circular or may have another shape. Preferably, a suitable shape is symmetrical such as quadratic, hexagonal or octagonal, but other shapes such as triangular or pentagonal are also possible. A symmetric shape is of advantage since the shape of the body should correspond to the shape of the inner opening 27 of the stackable foundation spacer. A symmetric shape facilitates the loading of spacers on the feeder device.

The feeder device, in a not claimed embodiment, comprises a release mechanism 2 for releasing one foundation spacer at the time and a handle 4 for holding the feeder device. In the shown example, the feeder device comprises a release grip 3 for operating the release mechanism 2. The feeder device is held in the handle by a user. The user operates the release mechanism by moving the handle and the release grip towards each other, in the shown example by pushing the release grip downwards. This movement operates the release mechanism 2 at the lower end of the feeder device. The release grip is in the shown example connected to a central operating finger 11 having cams and notches that are adapted to interact with the release means of the release mechanism.

It is also possible to operate the release mechanism in other ways. In the invention, the release mechanism is spring-loaded and the release mechanism is operated by quickly pulling the handle upwards. This pulling action will overcome the spring force of the spring-loaded release mechanism, which will release a single spacer. In another, not claimed, example, the release mechanism is operated by operating a lever which in turn operates the release mechanism by a wire. The release mechanism may in another not claimed embodiment, be operated by electricity. By pressing a switch, an actuator may operate the release mechanism such that a spacer is released, e.g. by pulling the operating finger. It is also possible to provide the release mechanism with a voice control, which will recognize a specific release command and which will release a spacer each time that the release command is given.

The actuator may be an electromagnetic actuator or may comprise a motor.

The release mechanism 2 is provided with a first release means 9 and a second release means 10. The first release means 9 and the second release means 10 are similar, and the second release means 10 is arranged above the first release means 9 in a vertical direction. The distance between the first release means and the second release means corresponds to the spacing between two stacked spacers. In this way, a single spacer can be released when the release mechanism is operated. The first release means 9 is arranged at a first position 5 and is adapted to hold either a single spacer or all spacers. The second release means 10 is arranged at a second position 6 and is adapted to hold the remaining stack of plurality of spacers when the lowermost spacer is released.

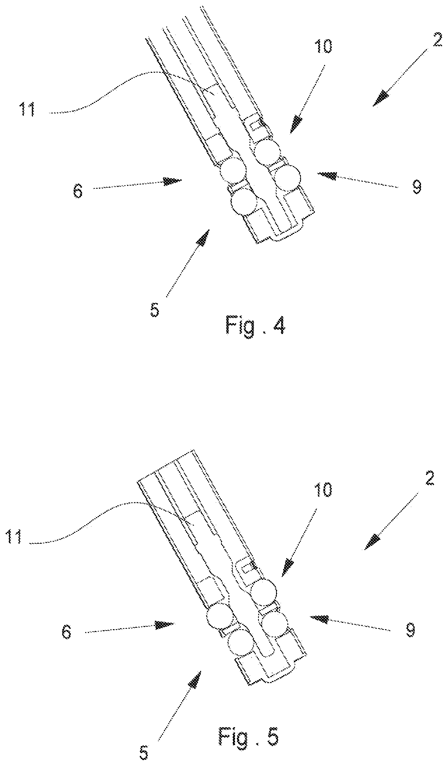

One or both release means 9, 10 may protrude outwards from the body when they are in an idle or hold position. In one example, the first release means 9 will protrude outwards such that it will hold all spacers when the release mechanism is idle, as shown in Fig. 4. In this example, the release means 10 are retracted such that they do not protrude from the surface of the feeder body. When the release mechanism is operated, here by pulling the handle 4 and the release grip 3 towards each other, thereby pulling the operating finger 11 upwards, the second release means 10 will protrude outwards such that the second release means will be able to support all spacers but the lowermost one. By operating the release mechanism further, the first release means 9 will retract such that it is aligned with the body and a single spacer, i.e. the lowermost spacer, is released. The rest of the spacers will now be held by the second release means 10, as shown in Fig. 5. By releasing the release mechanism, i.e. by releasing the release grip such that the handle and the release grip extend from each other back to the idle position, the first release means 9 will protrude outwards such that it will be able to hold all spacers. A return spring 8 is preferably arranged to return the release grip to its idle position, and at the same time return the release mechanism to the idle position. When the release grip moves back to the idle position, the second release means, holding all the remaining spacers, retract such that all spacers fall down to the first position where they are held by the first release means 9.

In another example, the first release means 9 will protrude outwards such that it will hold a single spacer and the second release means 10 will protrude outwards such that it will hold all spacers but the lowermost one when the release mechanism is idle. The first release means 9 will first retract such that it is aligned with the body when the release mechanism is operated. In this way, the single spacer held by the first release means 9 will be released and can fall down from the first position. By operating the release grip further, the first release means 9 will protrude again, and the second release means 10 will retract such that the stack of spacers is released from the second position 6. The stack of spacers will fall down such that the first, lowermost spacer in the stack will arrive at the first position 5 and will be held by the first release means 9. The other spacers will bear on the first spacer until the release grip is released again. A return spring 8 is preferably arranged to return the release grip to its idle position, and at the same time return the release mechanism to the idle position. This will prompt the second release means 10 to protrude again, thereby holding the remaining stack of spacers. The first release means 9 will now only hold the lowermost spacer. By the next operation of the release grip, the single spacer held by the first release means 9 in the first position 5 will be released and the operation is repeated such that a new single spacer is loaded to the first position 5.

The release means could also comprise two screws arranged on opposite sides of the lower part of the body, where a screw comprises a spiral shaped holding surface that will release a spacer when the screw is rotated. The stack of spacers will bear on second threads of the screws and by rotating the screws, the lowermost spacer will be transferred to first, lower threads and the remaining stack of spacers will be held by the second threads. The rotation of the threads can be actuated by a gripping handle or by an electric motor controlled by a switch. By pressing the switch or by pulling the handle, the screws will rotate one turn, thereby releasing one spacer.

When all spacers in the stack of spacers have been released, a new stack of spacers can be loaded on the feeder device. This is done by operating the release grip to a feed-in position, in which both release means are retracted or loose at the same time. Such a position may e.g. be realised by rotating the release grip by 90 degrees. This allows both release means to align with the outer body surface, such that the feeder device can easily be inserted into a new stack of spacers. When the feeder device has been inserted into the stack of spacers, the release grip is returned from the feed-in position such that the stack of spacers is held by the release mechanism. The user can now continue distributing spacers.

The feeder device can be designed in various ways. It is however preferred that the release means hold the spacer on an inner support surface at a central inner opening, e.g. an inner rim, of the spacer. In this way, a simple and reliable handheld feeder device is obtained. The release means may comprise balls or catches that may be loose or spring-loaded. In the shown example, the release means comprise balls that are pushed out of openings in the feeder body by an operating finger 11 having cams and notches at specific positions. The balls bear against the operating surfaces of the operating finger 11. A cam will push out the balls of a release means and a notch will allow the balls to retract. In the shown example, the balls are loose, i.e. are not fixedly connected to the operating finger 11. The operation of the release grip is preferably transferred to the release mechanism by a rod or wire. It is also possible to let the release means be spring-loaded such that they retract when the feeder device is inserted into a new stack of spacers.

An advantage of providing the release grip with a feed-in position is that it is easy to insert or retract the feeder device through a complete stack of spacers, since both release means are retracted at the same time. This is of advantage if e.g. the distribution of spacers is finished and the stack of spacers are to be removed from the feeder device or when the spacers are to be replaced with spacers of another size.

The feeder device could also be used for reinforcement spacers that are rotatable attached to a reinforcing grid from above, and which after the attachment can rotate to a position that supports the reinforcing grid from below, when the reinforcing grid is lifted. The spacer may be rotated by hand or may rotate by the gravity force caused by the weight of the spacer. The height of such a spacer must be smaller than the mesh size of the reinforcing grid.

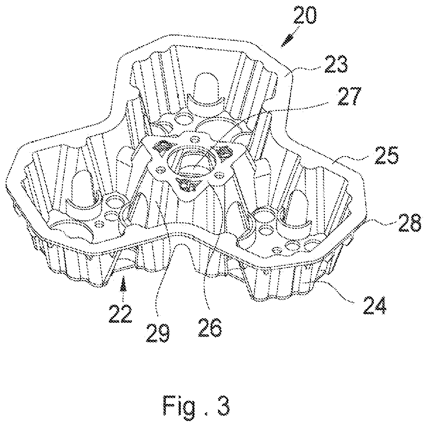

An example of a foundation spacer 20 is shown in Fig. 3. The foundation spacer comprises a first bearing surface 22 which is adapted to be placed on the ground surface where the concrete is poured. This ground surface may be relatively soft and uneven, usually comprising a bedding of coarse sand, gravel, grit or other free-draining material. The first bearing surface of the foundation spacer must thus be relatively large such that the spacer can stand stable and does not sink into the soft ground surface. The ground surface may also be expanded polystyrene (EPS), which is also relatively soft such that a larger bearing surface is of advantage. The foundation spacer further comprises a first circumferential support surface 23 adapted to support the reinforcement grid in a plurality of positions. The size of the spacer and thus the outer circumferential 28 of the upper support surface is such that it is larger than a mesh in the reinforcement grid. In this way, the foundation spacer can always support the reinforcement grid, regardless of where the foundation spacer is positioned relative the reinforcement grid. An outer circumferential side wall 24 connects the first bearing surface 22 with the first support surface 23. The outer circumferential side wall 24 is inclined outwards from the first bearing surface to the first support surface.

The inclination angle of the side wall is preferably within a range of 1 - 30 degrees, and more preferred 2 - 15 degrees. In this way, the spacer is easy to produce and several spacers can be stacked in each other. A smaller angle gives a stiffer and stronger spacer. A larger angle may reduce the required material usage.

The outwards inclination of the side wall allows the upper part of the foundation spacer to be larger than the lower part of the foundation spacer. In this way, the reinforcement grid can always be supported and material is saved since the base of the foundation spacer can be made smaller than a mesh of the reinforcement grid. A further advantage of using inclined side walls is that foundation spacers can be stacked in each other, which additionally saves space during transportation and storage and allows for an easy distribution of the spacers by using a handheld feeder device according to the invention. The first bearing surface is provided with a plurality of openings that allows less material to be used and that allows concrete to flow through during the concrete is poured in the mould. Also the side walls are preferably provided with openings that let concrete pass through.

The upper support surface 23 is provided with a rim 25 that extends outwards from the side wall 24. The rim will in this example constitute the upper support surface of the spacer. The outer circumference 28 of the rim thus sets the size of the support surface. The size of the support surface is such that it is larger than a mesh in the reinforcement grid that is to be supported. By securing that the foundation spacer can always support the reinforcement grid without the spacer passing through a mesh, the foundation spacer can be distributed randomly on the ground surface. An exact positioning is thus not required, which saves time. Further, a handheld feeder device can be used to distribute spacers manually in an even more time efficient way.

The rim will further increase the support area for the reinforcement grid and will also prevent the reinforcement grid to cut through the support surface and to damage the foundation spacer. The rim should extend around the complete spacer without interruptions. The foundation spacer is also provided with a second support surface 26 comprising an inwardly extending rim positioned in the centre of the spacer. The centre of the spacer is provided with an opening 27. The size of the opening 27 is adapted to the size of the handheld feeder device, such that the body of the feeder device can fit through the opening. In this way, the foundation spacers can be held by the feeder device and be supported by the body of the feeder device. The second support surface is connected with the bearing surface 22 via a circumferential inner side wall 29, which is inclined inwards. Since the inner side wall is inclined inwards, from the bearing surface to the second support surface, it is possible to stack spacers in each other. The second support surface helps to stabilize the foundation spacer and provides a further support surface, such that the weight of the reinforcement grid is distributed on more contact points.

Since the upper support surface is flat and is situated in one plane and does not comprise any holding means for reinforcement bars, the foundation spacer is mainly intended for supporting reinforcement grids. It is of course possible to use it for support of other types of suitable reinforcement structures as well. The spacer can be randomly placed and will still support reinforcement grids. The foundation spacer is adapted to be used for repairing, renovating and for new constructions of any foundations/ground plates where reinforcement is used, and needs to be elevated from the ground, formwork or other surface regardless of material.

The size and design of the foundation spacer makes it possible to place it more or less at random. There are no regulations that stipulate the required number of spacers needed to support a given reinforcement grid. With this type of foundation spacer, the number of foundation spacers and the exact position of each spacer are not important, since the reinforcement grid is always supported by every spacer.

The inner side of the outer side wall may also be provided with ridges or other distance means which are adapted to facilitate the stacking of spacers. The height of the ridges are such that the bearing surface of another spacer will stand on the ridges when stacked, which prevents the spacers to stick to each other when they are pushed together. The ridges further define the spacing in height, i.e. the vertical interval, between the spacers. A well-defined vertical interval is advantageous in that it simplifies the feeding of stacked spacers. The spacing between two stacked spacers corresponds to the distance between the two release means of the feeder device.

The foundation spacer is adapted to be distributed by hand by a user. Since the foundation spacer shown in Fig. 3 can be placed randomly and must not be positioned exactly, it is time efficient and easy to use. Compared with linear spacers, which is the currently fastest working method for laying foundation spacers, the time for distributing such a stackable foundation spacer can be reduced considerably by using an inventive handheld feeder device.

The invention is not to be regarded as being limited to the embodiments described above, a number of additional variants and modifications being possible within the scope of the subsequent patent claims.

### REFERENCE SIGNS

- 1:: Feeder device
- 2:: Release mechanism
- 3:: Release grip
- 4:: Handle
- 5:: First position
- 6:: Second position
- 7:: Body
- 8:: Return spring
- 9:: First release means
- 10:: Second release means
- 11:: Operating finger
- 20:: Foundation spacer
- 21:: Stack of foundation spacers
- 22:: Lower bearing surface
- 23:: First support surface
- 24:: Side wall
- 25:: Upper rim
- 26:: Second support surface
- 27:: Central opening
- 28:: Outer circumference
- 29:: Inner side wall

## Claims

1. Handheld feeder device (1) adapted to distribute stackable reinforcement spacers (20), where the reinforcement spacers are stacked in each other, where the feeder comprises a body (7) adapted for holding a plurality of stackable reinforcement spacers (20) by a central inner opening (27) of the reinforcement spacer, a handle (4) for holding the feeder device (1), and a release mechanism (2) adapted for releasing one reinforcement spacer (20) at the time, where the release mechanism (2) comprises a release means (9, 10) arranged to protrude outwards from the feeder body (7) when the release means is in a hold position, **characterized in that** the release mechanism (2) is spring-loaded and that the release mechanism is operated by pulling the handle (4) upwards in order to overcome the force of the spring force of the release mechanism.

2. Feeder device according to claim 1, **characterized in that** the feeder device comprises a release grip (3) for operating the release mechanism (2).

3. Feeder device according to claim 1 or 2, **characterized in that** the release mechanism (2) is operated by hand.

4. Feeder device according to any of the preceding claims, **characterized in that** the body (7) is a longitudinal rod.

5. Feeder device according to claim 4, **characterized in that** the outer shape of the body (7) is circular.

6. Feeder device according to any of the preceding claims, **characterized in that** the release mechanism (2) is provided with a first release means (9) at a first position (5) and a second release means (10) at a second position (6).

7. Feeder device according to claim 6, c**haracterized in** that the first release means (9) is adapted to protrude outwards such that it will hold a single spacer and that the second release means (10) is adapted to protrude such that it will hold all spacers but one when the release mechanism is in a hold position.

8. Feeder device according to claim 6, **characterized in that** the first release means (9) is adapted to protrude such that it will hold all spacers and that the second release means (10) is adapted to be retracted when the release mechanism is in a hold position.

9. Feeder device according to any of claims 6 to 8, **characterized in that** the distance between the first position (5) and the second position (6) corresponds to the distance between two stacked spacers.

10. Feeder device according to claim 7, **characterized in that** the release mechanism (2) is arranged to first retract the first release means (9) such that one spacer is released from the first position (5), to protrude the first release means and then to retract the second release means such that one spacer is released from the second position (6) to the first position (5) when the release mechanism is operated to release a spacer.

11. Feeder device according to claim 8, **characterized in that** the release mechanism is arranged to first protrude the second release means (10) such that it will hold all spacers but one at the second position (6) and then to retract the first release means (9) such that a single spacer is released from the first position (5) when the release mechanism is operated to release a spacer.

12. Feeder device according to any of the preceding claims, **characterized in that** the feeder mechanism is provided with a feed-in position in which both release means (9, 10) are adapted to retract such that they are aligned with the feeder body (7) at the same time.

## Patentansprüche

1. Tragbare Zuführvorrichtung (1), die ausgelegt ist zum Verteilen von stapelbaren Verstärkungsabstandshaltern (20), wobei die Verstärkungsabstandhalter ineinander gestapelt sind, wobei der Zuführer einen Körper (7) umfasst, der ausgelegt ist zum Halten einer Vielzahl von stapelbaren Verstärkungsabstandshaltern (20) durch eine zentrale Innenöffnung (27) des Verstärkungsabstandshalters, einen Griff (4) zum Halten der Zuführvorrichtung (1) und einen Freigabemechanismus (2), der ausgelegt ist zur Freigabe eines Verstärkungsabstandshalters (20) zu dem Zeitpunkt, wenn der Freigabemechanismus (2) ein Freigabemittel (9, 10) umfasst, das so angeordnet ist, dass es vom Zuführerkörper (7) nach außen projiziert, wenn sich das Freigabemittel in einer Halteposition befindet, **dadurch gekennzeichnet, dass** der Freigabemechanismus (2) federbelastet ist und dass der Freigabemechanismus durch Ziehen des Griffs (4) nach oben betätigt wird, um die Kraft der Federkraft des Freigabemechanismus zu überwinden.

2. Zuführvorrichtung nach Anspruch 1, **dadurch gekennzeichnet, dass** die Zuführvorrichtung einen Freigabegriff (3) zum Betätigen des Freigabemechanismus (2) umfasst.

3. Zuführvorrichtung nach Anspruch 1 oder 2, **dadurch gekennzeichnet, dass** der Freigabemechanismus (2) von Hand betätigt wird.

4. Zuführvorrichtung nach einem der vorgehenden Ansprüche, **dadurch gekennzeichnet, dass** der Körper (7) ein Längsstab ist.

5. Zuführvorrichtung nach Anspruch 4, **dadurch gekennzeichnet, dass** die äußere Form des Körpers (7) kreisförmig ist.

6. Zuführvorrichtung nach einem der vorhergehenden Ansprüche, **dadurch gekennzeichnet, dass** der Freigabemechanismus (2) mit einem ersten Freigabemittel (9) an einer ersten Position (5) und einem zweiten Freigabemittel (10) an einer zweiten Position (6) versehen ist.

7. Zuführvorrichtung nach Anspruch 6, **dadurch gekennzeichnet, dass** das erste Freigabemittel (9) ausgelegt ist, um derartig nach außen zu projizieren, dass es einen einzigen Abstandshalter hält, und dass das zweite Freigabemittel (10) ausgelegt ist, um derartig zu projizieren, dass es alle Abstandshalter außer einem hält, wenn sich der Freigabemechanismus in einer Halteposition befindet.

8. Zuführvorrichtung nach Anspruch 6, **dadurch gekennzeichnet, dass** das erste Freigabemittel (9) ausgelegt ist, um derartig zu projizieren, dass es alle Abstandshalter hält, und dass das zweite Freigabemittel (10) ausgelegt ist, um zurückgezogen zu werden, wenn sich der Freigabemechanismus in einer Halteposition befindet.

9. Zuführvorrichtung nach einem der Ansprüche 6 bis 8, **dadurch gekennzeichnet, dass** der Abstand zwischen der ersten Position (5) und der zweiten Position (6) dem Abstand zwischen zwei gestapelten Abstandshaltern entspricht.

10. Zuführvorrichtung nach Anspruch 7, **dadurch gekennzeichnet, dass** der Freigabemechanismus (2) so angeordnet ist, dass er zuerst das erste Freigabemittel (9) derartig zurückzieht, dass ein Abstandshalter von der ersten Position (5) freigegeben wird, um das erste Freigabemittel zu projizieren und dann das zweite Freigabemittel derartig zurückzuziehen, dass ein Abstandshalter von der zweiten Position (6) in die erste Position (5) freigegeben wird, wenn der Freigabemechanismus betätigt wird, um einen Abstandshalter freizugeben.

11. Zuführvorrichtung nach Anspruch 8, **dadurch gekennzeichnet, dass** der Freigabemechanismus so angeordnet ist, dass er zuerst das zweite Freigabemittel (10) derart projiziert, dass es alle Abstandshalter außer einem an der zweiten Position (6) hält und dann das erste Freigabemittel (9) derartig zurückzieht, dass ein einzelner Abstandshalter von der ersten Position (5) freigegeben wird, wenn der Freigabemechanismus betätigt wird, um einen Abstandshalter freizugeben.

12. Zuführvorrichtung nach einem der vorhergehenden Ansprüche, **dadurch gekennzeichnet, dass** der Zuführmechanismus mit einer Zuführ-Position versehen ist, in der beide Freigabemittel (9, 10) ausgelegt sind, ûm mit dem Zuführkörper (7) gleichzeitig ausgerichtet zu werden.

## Revendications

1. Dispositif d'alimentation portable (1) adapté pour distribuer des entretoises de renforcement empilables (20), les entretoises de renforcement étant empilées les unes dans les autres, dans lequel le dispositif d'alimentation comprend un corps (7) adapté pour contenir une pluralité d'entretoises de renforcement empilables (20) par une ouverture intérieure centrale (27) de l'entretoise de renforcement, une poignée (4) pour maintenir le dispositif d'alimentation (1), et un mécanisme de libération (2) adapté pour libérer une entretoise de renforcement (20) au moment où le mécanisme de libération (2) comprend un moyen de libération (9, 10) agencé pour faire saillie vers l'extérieur du corps d'alimentation (7) lorsque le moyen de libération est dans une position de prise, **caractérisé en ce que** le mécanisme de libération (2) est chargé par ressort, et que le mécanisme de libération est actionné en tirant la poignée (4) vers le haut afin de vaincre la force de la force de ressort provenant du mécanisme de libération.

2. Dispositif d'alimentation selon la revendication 1, **caractérisé en ce que** le dispositif d'alimentation comprend une poignée de libération (3) pour actionner le mécanisme de libération (2).

3. Dispositif d'alimentation selon la revendication 1 ou 2, **caractérisé en ce que** le mécanisme de libération (2) est actionné à la main.

4. Dispositif d'alimentation selon l'une quelconque des revendications précédentes, **caractérisé en ce que** le corps (7) est une tige longitudinale.

5. Dispositif d'alimentation selon la revendication 4, **caractérisé en ce que** la forme extérieure du corps (7) est circulaire.

6. Dispositif d'alimentation selon l'une quelconque des revendications précédentes, **caractérisé en ce que** le mécanisme de libération (2) est pourvu d'un premier moyen de libération (9) à une première position (5) et d'un deuxième moyen de libération (10) à une deuxième position (6).

7. Dispositif d'alimentation selon la revendication 6, **caractérisé en ce que** le premier moyen de libération (9) est adapté pour faire saillie vers l'extérieur de sorte qu'il retienne une seule entretoise, et que le deuxième moyen de libération (10) est adapté pour faire saillie de sorte qu'il retienne toutes les entretoises sauf une lorsque le mécanisme de libération est dans une position de prise.

8. Dispositif d'alimentation selon la revendication 6, **caractérisé en ce que** le premier moyen de libération (9) est adapté pour faire saillie de sorte qu'il retienne toutes les entretoises, et que le deuxième moyen de libération (10) est adapté pour être rétracté lorsque le mécanisme de libération est dans une position de prise.

9. Dispositif d'alimentation selon l'une quelconque des revendications 6 à 8, **caractérisé en ce que** la distance entre la première position (5) et la deuxième position (6) correspond à la distance entre deux entretoises empilées.

10. Dispositif d'alimentation selon la revendication 7, **caractérisé en ce que** le mécanisme de libération (2) est agencé pour d'abord rétracter le premier moyen de libération (9) si bien qu'une entretoise est libérée de la première position (5), pour faire saillir le premier moyen de libération puis pour rétracter le deuxième moyen de libération si bien qu'une entretoise est libérée de la deuxième position (6) à la première position (5) lorsque le mécanisme de libération est actionné pour libérer une entretoise.

11. Dispositif d'alimentation selon la revendication 8, **caractérisé en ce que** le mécanisme de libération est agencé d'abord pour faire saillir le deuxième moyen de libération (10) de sorte qu'il retienne toutes les entretoises sauf une à la deuxième position (6) et ensuite pour rétracter le premier moyen de libération (9) de sorte qu'une seule entretoise soit libérée de la première position (5) lorsque le mécanisme de libération est actionné pour libérer une entretoise.

12. Dispositif d'alimentation selon l'une quelconque des revendications précédentes, **caractérisé en ce que** le mécanisme d'alimentation est pourvu d'une position d'alimentation dans laquelle les deux moyens de libération (9, 10) sont adaptés pour se rétracter de sorte qu'ils soient alignés avec le corps d'alimentation (7) en même temps.
